Europäisches Patentamt

European Patent Office

Office européen des brevets

(11) Publication number: **0 105 230**
A2

## (12) EUROPEAN PATENT APPLICATION

(21) Application number: 83108985.9

(22) Date of filing: 12.09.83

(51) Int. Cl.³: **H 01 S 3/04,** H 01 S 3/092

(30) Priority: 30.09.82 US 428770

(43) Date of publication of application: 11.04.84
Bulletin 84/15

(84) Designated Contracting States: **DE FR GB**

(71) Applicant: **GENERAL ELECTRIC COMPANY, 1 River
Road, Schenectady New York 12305 (US)**

(72) Inventor: **Czernecki, Ronald John, R.D. 2, Lake Ariel,
Pennsylvania 18436 (US)**
Inventor: **Hobbs, Thomas Benjamin, R.D. 1 Stanton Hill
Road, Box 346, Nichols New York 13812 (US)**

(74) Representative: **Voigt, Reinhard, Dipl.-Ing. European
Patent Attorney et al, Kaiserstrasse 41, D-6000 Frankfurt
(Main) 1 (DE)**

(54) Triggering and cooling apparatus for laser flashlamps.

(57) A triggering and cooling apparatus for a parallel-triggered flashlamp, particularly useful in optically pumped lasers, advantageously provides support for the lamp allowing it to survive in harsh environments, while allowing for the handling of high electrical currents and providing a triggering arrangement in close proximity to but electrically isolated from the lamp electrodes. The apparatus includes an optically clear cylindrical outer envelope. First and second sleeves are provided which are secured respectively to the first and second electrodes of the lamp for locating the lamp concentrically and symmetrically within the cooling jacket. The first sleeve. which is adjacent the end of the lamp wherein the parallel trigger electrode enters, is fitted within a non-electrically conductive member which in turns is tightly fitted within the cooling jacket. A pair of end members are provided for sealing the ends of the cooling jacket to produce a coolant chamber for receiving a flow of liquid coolant, the end members being provided with means for introducing to the lamp electrodes operating potentials as well as means for introducing to the trigger electrode a triggering voltage for starting the flashlamp.

# TRIGGERING AND COOLING APPARATUS
# FOR LASER FLASHLAMPS

## Background of the Invention

### Field of the Invention

This invention relates generally to parallel-triggered flashlamps and more particularly to techniques for the cooling and triggering of flashlamps used with optically pumped lasers.

### Description of the Prior Art

In the laser art, as progressively higher output powers are obtained, whether from pulsed or continuously running lasers, more and more stringent requirements are encountered for the thermal environment in which the laser device must operate. In its most basic form, control of the thermal environment of a laser device is exercised through cooling of the lasing medium by a flow of cool gases or liquids over the materials per se, or over heat sinks which draw from the lasing materials. Recent advances in the field of solid state lasers using total internal reflection (TIR) within face pumped lasers (FPL) for development of the optical path for beam forming have added new dimensions to the thermal problems to be addressed. A part of the problem is due to the contamination of the cooling fluid

-2-

because of interaction with the materials in contact therewith. Contamination can then be deposited on the lasing medium (host material) affecting the TIR which, in turn, decreases the energy output of the lasing medium. Another part of the problem is due to a reduction in laser output power because of the thermally induced optical distortion in the laser materials.

A significant source of heat within the TIR-FPL, or in any optically pumped laser, is the use of the flashlamp for pumping of the host material. For an overview description of a TIR-FPL system, reference may be had to the publication "Total Internal Reflection Face Pumped Laser: Concept and Design Considerations" by G. J. Hulme and W. B. Jones, General Electric Company, Binghamton, New York, or to U.S. Patent Nos. 3,679,999-Chernoch; 3,581,229-Martin; 3,500,231-Tomiyasu and Almasi; 3,466,569-Chernoch; and 3,423,693-Chernoch and Koenig, all of which are assigned to the assignee of the present invention.

0105230

-3-

A representative prior art technique for the cooling of laser devices and the flashlamps associated with them is provided in U.S. Patent No. 3,679,999-Chernoch, assigned to the assignee of the present invention. The Chernoch '999 patent teaches the technique of removal of heat from a solid-state laser material via the combination of a gas layer in contact with a high thermal conductivity solid, all of which is heat-sinked by a cooling fluid.

Beyond the heat problems, operation of the flashlamps themselves has received attention due to their requirements for high voltages, both to initiate and to maintain their light-producing arc. Representative prior art teaching techniques for energizing these flashlamps, and especially the parallel-triggered type, is provided in U.S. Patent Nos. 4,010,397-Hon and 4,047,064-Cosco et al. Both patents address the problems associated with providing parallel triggering arrangements for flashlamps, without reference to cooling considerations. U.S. Patent 4,207,541-Karger et al. addresses the problem of providing a parallel-triggering arrangment for a flashlamp in conjunction with a cooling mechanism for the flashlamp. Regarding the arrangement of the '541-Karger et al. patent, concern has arisen regarding the ability of the flashlamp and its cooling mechanism to survive in a harsh environment as well as the inability of the triggering electrode to start the flashlamp each and every time such starting is desired.

-4-

It is therefore a principal object of the present invention to overcome the disadvantages attendant in the prior art approaches and to provide improved apparatus for mounting a flashlamp which has the ability to survive in a harsh thermal and physical environment while providing fluid cooling and electrical connections which are capable of carrying high currents.

A further object is to provide a cooling jacket including a trigger wire electrode, for parallel-triggered flashlamps, in close proximity to the electrode of the flashlamp while having the trigger wire sufficiently isolated from the lamp electrode.

A further object is to reduce the size of the transformer required in trigger circuitry with the added benefit of weight reduction.

A further object is to increase the reliability and decrease the vulnerability to breakage of the flashlamp and cooling jacket.

A still further object is to produce a triggering and a cooling jacket arrangement for a laser flashlamp wherein the materials used are such that they have a minimal ion implantation effect into the coolant fluid.

## Summary of the Invention

The above and other objects of the present invention are accomplished by providing apparatus for triggering and cooling a flashlamp of the elongated cylindrical, parallel-triggered type having a conductive electrode disposed coaxially within and being secured and sealed to the lamp envelope at each end thereof, the apparatus including an elongated tubular enclosure having inner and outer wall surfaces and open ends for receiving the flashlamp therein and for forming a coolant chamber for passing a fluid coolant over the flashlamp, the enclosure being of optically transparent material through which light energy from the lamp may be efficiently transmitted. Also included is a first lamp mounting member having an opening at one end for receiving a first of the electrodes of the flashlamp, the member having means for enabling a flow of coolant fluid to pass through the coolant chamber. A non-electrically conductive sleeve having inner and outer walls surfaces is provided for receiving therein the first mounting member, the sleeve being adapted to fit within the tubular enclosure for concentrically aligning the lamp therein, the sleeve further extending inwardly of the lamp past the first mounting member. A triggering electrode is included disposed within the coolant chamber along a portion of the length of the lamp, the triggering electrode having one end disposed between the non-conductive sleeve and the tubular enclosure so as to be electrically insulated from the lamp electrode. A second lamp mounting member is provided having an opening at one end for receiving a second of the electrodes of the flashlamp, the second member having means for enabling the flow of coolant fluid to pass through the coolant chamber, the second member being adapted to fit within the tubular enclosure for concentrically aligning the lamp therein. A pair of end members are included, one each disposed at the respective ends of the tubular enclosure for forming a closed coolant chamber, the end members being provided with inlet and outlet means communicating with the first and second lamp mounting members for allowing the flow of coolant fluid through the coolant chamber, the end member adjacent the triggering electrode being provided with means for connecting a triggering voltage to the triggering electrode.

Brief Description of the Drawing

These and other features of the present invention will be readily apparent from the following description when taken with the accompanying drawing in which:

Figure 1 is an exploded perspective view of the preferred embodiment of the flashlamp triggering and cooling apparatus of the present invention; and

Figure 2 is a side elevational view showing in more detail the flashlamp triggering and cooling apparatus of the present invention, in the preferred embodiment.

## Description of the Preferred Embodiment

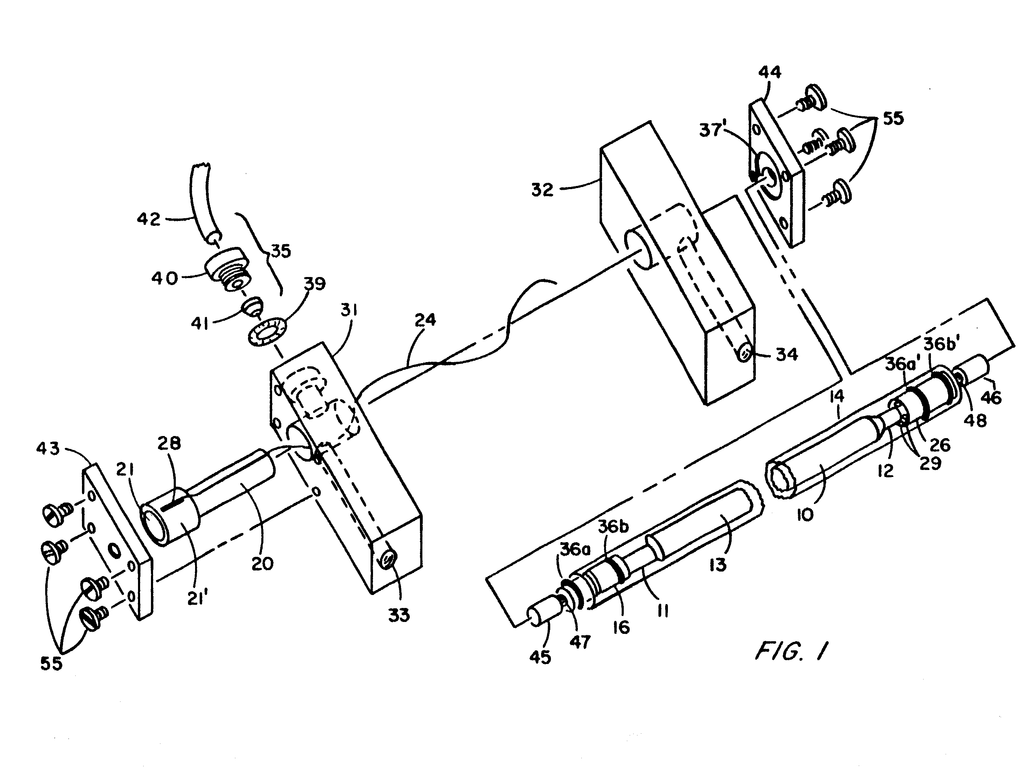

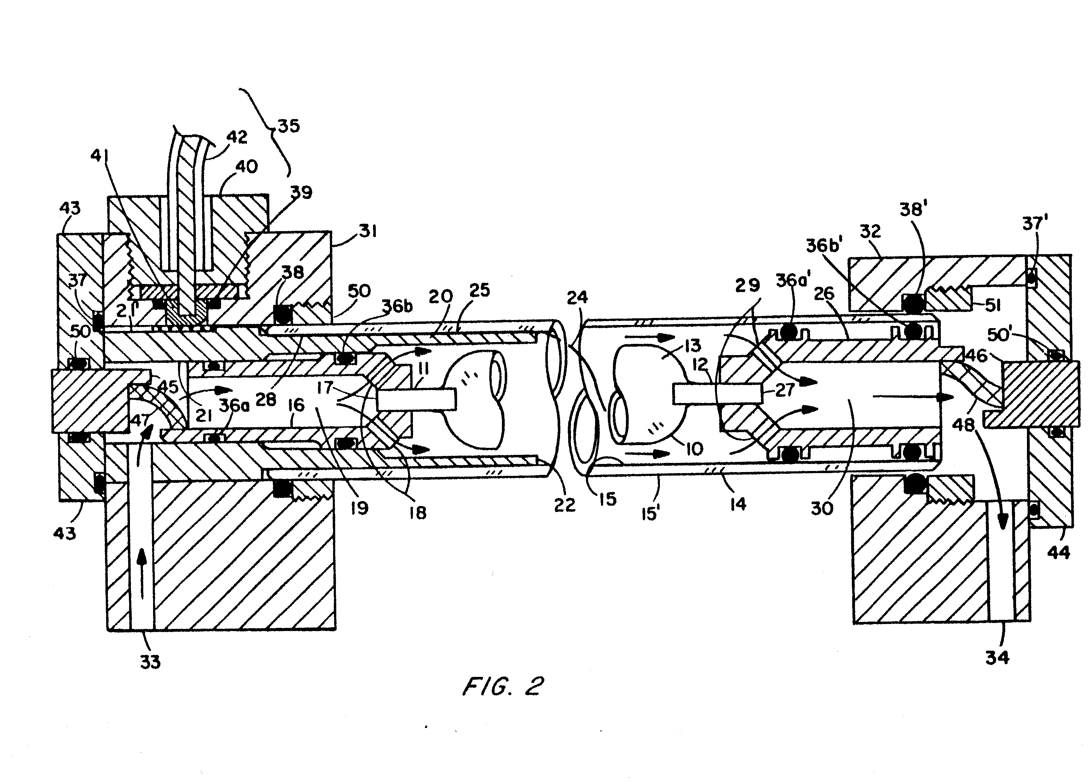

Referring now generally to Figures 1 and 2, there is shown the preferred embodiment of the flashlamp triggering and cooling apparatus of the present invention. Such apparatus may be useful with a flashlamp 10 which is of the elongated cylindrical, parallel-triggered type having a pair of conductive electrodes 11 and 12 disposed coaxially within the lamp envelope 13 at opposite ends of the lamp, each of the electrodes 11 and 12 being secured and sealed to the lamp envelope 13. Flashlamp 10 may be a conventional xenon lamp within the envelope of which a volume of suitable gases is enclosed. As is well known, initiating the gaseous discharge within the lamp, which produces the pumping light of the desired spectral content and intensity for a particular laser, may be accomplished by means of an externally positioned trigger wire. This is known as shunt, or parallel, triggering and is characterized by providing the required higher initiating potential via electrodes other than the sustaining electrodes 11 and 12. Such will be discussed in more detail hereinafter.

-8-

An elongated tubular enclosure such as cooling jacket 14 having inner and outer wall surfaces 15 and 15' is open on each end for receiving the flashlamp 10 therein and for forming a coolant chamber for passing a fluid coolant across the flashlamp. Cooling jacket 14 is of an optically transparent material through which light energy from the lamp 10 may be efficiently transmitted. In the preferred embodiment, cooling jacket 14 is formed of thin-walled cylindrical glass tubing of optical quality having an inner diameter sufficiently larger than the outer diameter of the flashlamp 10 so as to accommodate the flashlamp, associated other elements of the cooling apparatus, and allow sufficient coolant flow, as will be set forth hereinafter, and having a length sufficient to accommodate the flashlamp 10 as well as the other members of the cooling apparatus.

A first lamp mounting member 16 is provided having an opening 17 at one end for receiving first electrode 11 of the flashlamp 10. First mounting member 16 is provided with means in the form of a plurality of apertures 18 communicating with a hollow interior 19 for enabling the flow of coolant fluid to pass. In the preferred embodiment, member 16 is formed of stainless steel and opening 17 is sized such that first electrode 11 mates therewith in slip-fit fashion, the two pieces then being soldered together. Mounting member 16 is provided with a pair of O-rings 36a and 36b, the purpose of which will be discussed hereinafter.

A non-electrically conductive sleeve 20 is provided having inner and outer wall surfaces 21 and 21' for receiving therewithin first lamp mounting member 16, sleeve 20 being adapted to fit somewhat tightly within the cooling jacket 14 for concentrically aligning the flashlamp 10 therein. Non-conductive sleeve 20 extends inwardly of the flashlamp 10 beyond the first mounting member 16, as seen at 22 (Figure 2). O-rings 36a and 36b serve to tighten the assembly of sleeve 20 and member 16 thereby to align the flashlamp 10 within the cooling jacket 14 and to absorb shock which might otherwise be transmitted to flashlamp 10.

A triggering electrode 24, preferably formed of stainless steel, is disposed within the coolant chamber along a portion of the length of the lamp 10. Triggering electrode 24 has one end 25 disposed between non-conductive sleeve 20 and cooling jacket 14 so as to be electrically insulated from lamp electrode 11. End portion 25 of trigger electrode 24 is positioned axially in close proximity to cooling jacket 14 along non-conductive sleeve 20 and in actual practice, rests in a longitudinal slot 28 provided along the length of the outer wall 21' of the sleeve 20, the free end of the triggering electrode 24 being wound about the inner wall 15 of the cooling jacket 14 across substantially the length of the flashlamp 10. Triggering electrode 24 may have applied to it the several kilovolt potential required to provide the intense electrostatic

-10-

field of predetermined duration needed to provide initial ionization of the enclosed gases of flashlamp 10. Subsequent maintenance of the arc within the lamp 10 is accompanied by application of sustaining potentials across the electrodes 11 and 12 of the flashlamp on the order of 3 kv to 4 kv.

A second lamp mounting member 26 having an opening 27 is provided for receiving second electrode 12 of the flashlamp 10. In the preferred embodiment member 26 is formed of 17-4 stainless steel and opening 27 is also sized such that the second electrode mates therewith in slip-fit fashion, the two pieces then being soldered together. Second member 26 is provided with means such as a plurality of apertures 29 communicating through a hollow interior 30 for enabling the flow of coolant fluid to pass through the coolant chamber. Second member 26 is adapted to fit within cooling jacket 14 for concentrically aligning flashlamp 10 therein; a pair of O-rings 36a' and 36b' being provided to insure a rattle-proof assembly and proper alignment of the flashlamp 10 within cooling jacket 14.

A pair of end members 31 and 32 are provided, one each disposed at the respective ends of cooling jacket 14 for forming a closed coolant chamber. End members 31 and 32 are provided respectively with inlet and outlet means in the form of holes 33 and 34 communicating with first

-11-

and second sleeves 16 and 26 through internal openings for allowing the flow of coolant fluid through the coolant chamber. End member 31, adjacent to triggering electrode 24, is provided with means such as through-the-wall connector 35 for connecting a triggering voltage to the triggering electrode 24.

Through-the-wall connector 35 includes a threaded plug 40, for mating with threads on end member 31, and a metallic contact member 41, connected to a high voltage lead 42, making contact with triggering electrode 24 for supplying the high voltage necessary for starting the flashlamp 10. A coolant-fluid-tight connection is effected through O-ring 39 which serves to seal the opening in end member 31 to triggering electrode 24.

End members 31 and 32 advantageously serve as mounting brackets for the flashlamp cooling jacket assembly.

In the preferred embodiment, end members 31 and 32 are provided, respectively, with means for connecting operating voltages to the electrodes 11 and 12 of the flashlamp 10. Such takes the form of sealing plates 43 and 44, respectively, which receive and partially pass generally cylindrical conductors 45 and 46 and which are, in turn, electrically connected, respectively, to first member 16 and second member 26 by braided wires 47 and 48. Braided wires 47 and 48 are

-12-

secured to conductors 45 and 46 and to first member 16 and second member 26, respectively, by spot welding. Sealing plates 43 and 44 include slots for receiving O-rings 37 and 37' and when assembled to end members 31 and 32, serve to seal against leakage of coolant fluid from the coolant chamber. O-rings 50 and 50' serve, respectively, to seal against leakage of coolant from between sealing plate 43 and conductor 45, and sealing plate 44 and conductor 46. Plates 43 and 44 are secured, respectively, to end members 31 and 32 by screws 55.

In actual practice, a pair of O-rings 38 and 38' are provided for sealing the respective end members and the cooling jacket 14 from leakage of coolant fluid. Threaded members 50 and 51 engage, respectively, internal threads on end members 31 and 32 and when tightened compress the O-rings insuring a leak-proof seal.

In operation, a trigger electrode potential is applied from a suitable high voltage source (not shown) via the high voltage wire 42 of through-the-wall connector 35. A supply and return of fluid coolant is routed via the inlet/outlet ports 33 and 34 of end members 31 and 32 to provide a controlled thermal environment for the flashlamp 10. Of particular benefit is the provision of an integral assembly wherein the lamp triggering electrode 24 is housed within the coolant chamber volume in close proximity to

-13-

its associated lamp 10 but is nevertheless
electrically isolated from contact with lamp
electrode 11 by virtue of the non-conductive
sleeve 20.

TRIGGERING AND COOLING APPARATUS FOR LASER
FLASHLAMPS

## Claims

1.  Apparatus for triggering and cooling a
    flashlamp of the elongated cylindrical,
    parallel-triggered type having a conductive
    electrode disposed coaxially within and
    being secured and sealed to the lamp envelope at each end thereof, the apparatus
    comprising:

    o   an elongated tubular enclosure having
        inner and outer wall surfaces and open
        ends for receiving the flash lamp
        therein and for forming a coolant
        chamber for passing a fluid coolant
        over the flashlamp, the enclosure being
        of optically transparent material
        through which light energy from the
        lamp may be efficiently transmitted;

    o   A first lamp mounting member having an
        opening at one end for receiving a
        first of the electrodes of the flashlamp, the first member having means for
        enabling a flow of coolant fluid to
        pass through the coolant chamber;

    o   a non-electrically conductive sleeve
        for receiving therein the first mounting member, the sleeve having an inner
        and an outer wall surface and being
        adapted to fit within the tubular
        enclosure for concentrically aligning
        the lamp therein, the sleeve extending
        inwardly of the lamp past the first
        mounting member;

- 2 -

0105230

o a triggering electrode disposed within the coolant chamber along a portion of the length of the lamp, the triggering electrode having one end disposed between the non-conductive sleeve and the tubular enclosure so as to be electrically insulated from the lamp electrode;

o a second lamp mounting member having an opening at one end for receiving a second of the electrodes of the flashlamp, the second member having means for enabling the flow of coolant fluid to pass through the coolant chamber, the second member being adapted to fit within the tubular enclosure for concentrically aligning the lamp therein; and

o a pair of end members, one each disposed at the respective ends of the tubular enclosure for forming a closed coolant chamber, the end members being provided with inlet and outlet means communicating with the first and second mounting members for allowing the flow of coolant fluid through the coolant chamber, the end member adjacent the triggering electrode being provided with means for connecting a triggering voltage to the triggering electrode.

2. The invention of claim 1 wherein the end members are provided respectively with means for connecting operating voltages to the electrodes of the flashlamp.

3. The invention of claims 1 or 2 wherein the end members respectively further comprise O-ring members for sealing against coolant fluid leakage from the coolant chamber.

4. The invention of claim 1 wherein the triggering electrode comprises a stainless steel wire.

5. The invention of claim 4 wherein the triggering electrode is wound about the inner wall of the tubular enclosure across substantially the length of the flashlamp.

6. The invention of Claim 1 wherein the first lamp mounting member is provided with a pair of spaced apart O-rings on the exterior thereof making contact with the inner wall surface of the non-conductive sleeve for providing support for the first mounting member thereby to prevent transmission of bending moments to the lamp envelope.

7. The invention of claim 6 wherein the O-rings are of different diameters and the first lamp mounting member is provided with outer surfaces of different diameters for receiving the O-rings for facilitating assembly of the apparatus.

- 4 -

0105230

8. The invention of claims 1 or 6 wherein the second lamp mounting member is provided with a pair of spaced apart O-rings on the outer surface thereof making contact with the inner wall surface of the tubular enclosure for providing support for the second mounting member thereby to prevent transmission of bending moments to the lamp envelope.

9. The invention of claim 1 wherein the tubular enclosure, the first mounting member, the non-conductive sleeve, the second mounting member and the end members are of materials which add no significant amount of ions to the coolant fluid.

10. The invention of claim 1 wherein the first and second lamp mounting members are of an electrically conductive material and are fixedly secured respectively to the first and second lamp electrodes.

11. The invention of claim 10 wherein the end members communicate respectively with the first and second electrodes of the flashlamp through the first and second lamp mounting members.

12. The invention of claim 1 wherein the non-electrically conductive sleeve is provided with a longitudinal slot along the length of the outer wall surface for receiving therein the triggering electrode.

13. The invention of claim 1 wherein one of the end members is provided with coolant fluid inlet means and the other end member is provided with coolant fluid outlet means.

0105230

FIG. 1

FIG. 2